# EUROPÄISCHE PATENTSCHRIFT

(11) **EP 3 015 316 B1**
(45) Veröffentlichungstag und Bekanntmachung des Hinweises auf die Patenterteilung: **13.03.2019**
(21) Anmeldenummer: 15001605.3
(22) Anmeldetag: 29.05.2015
(51) Int. Cl.: B60R 13/10

(54) **HALTERUNG FÜR EIN SCHILD, INSBESONDERE EIN KENNZEICHENSCHILD FÜR KRAFTFAHRZEUGE**
SUPPORT FOR A SIGN, IN PARTICULAR A LICENSE PLATE FOR MOTOR VEHICLES
SUPPORT POUR UN PANNEAU, EN PARTICULIER UNE
PLAQUE D'IMMATRICULATION POUR VÉHICULES AUTOMOBILES

(30) Priorität: 03.11.2014 DE 102014016086
(43) Veröffentlichungstag der Anmeldung: 04.05.2016
(73) Patentinhaber: J.H. Tönnjes GmbH, 27751 Delmenhorst (DE)
(72) Erfinder: Tönjes, Piet, 27751 Delmenhorst (DE)
(74) Vertreter: Möller, Friedrich

(56) Entgegenhaltungen:
- BE-A3- 1 018 985
- DE-A1-102013 102 864
- DE-U1- 9 209 653

## Beschreibung

Die Erfindung betrifft eine Halterung für ein Schild gemäß dem Oberbegriff des Anspruchs 1.

Derartige Halterungen sollen die Montage von Schildern, insbesondere an Kraftfahrzeugen, erleichtern. Dabei wird beispielsweise derart vorgegangen, dass zunächst die Halterung an dem Kraftfahrzeug befestigt, insbesondere festgeschraubt wird. Dazu weist die Halterung verschiedene Löcher bzw. Öffnungen auf, durch die ein Befestigungsmittel wie beispielsweise eine Schraube gesteckt werden kann, die wiederum an dem Fahrzeug verschraubt wird. Darauffolgend wird das Schild durch beispielsweise Nuten und/oder Arretiereinrichtungen an der Halterung verankert.

Problematisch dabei kann es sein, dass für ein Großteil der Fahrzeuge die Aufnahmemittel für die Befestigungsmittel verschiedenartig ausgestaltet bzw. unterschiedlich zueinander positioniert sind. Aus DE 92 09 653 U1 und DE 10 2013 102 864 A1 sind Halterungen bekannt, die eine Vielzahl von verschiedenartigen und unterschiedlich ausgerichteten Löchern bzw. Öffnungen für die Befestigung der Schilder bzw. der Befestigungsmittel aufweisen. Allerdings darf diese Anzahl der Öffnungen bzw. Löcher auch nicht zu groß sein, da sonst die Halterung zu instabil werden würde. Die DE 92 09 653 U1 offenbart eine Halterung nach dem Oberbegriff von Anspruch 1.

Der Erfindung liegt daher die Aufgabe zugrunde, eine Halterung für ein Schild zu schaffen, dass universell einsetzbar ist.

Eine Halterung zur Lösung dieser Aufgabe weist die Merkmale des Anspruchs 1 auf. Demnach ist es erfindungsgemäß vorgesehen, dass die durchgehenden Löcher in einem gleichmäßigen Raster angeordnet sind, das sich mindestens über einen überwiegenden Teil der Fläche der Grundplatte erstreckt. Die durchgehenden Löcher weisen gegenüber der Grundplatte eine profilierte Umrandung auf, die in ihrer Form von der der Löcher abweichen kann. Dabei bildet die Grundplatte zusammen mit einem die Grundplatte umgebenden Rand ein Basisteil der Halterung. Durch die Umrandung der Löcher wird die Grundplatte bereichsweise, d. h. zumindest um die Löcher herum, verstärkt. Somit ist die Stärke bzw. die Dicke der Grundplatte um die Löcher größer als zwischen den Löchern. Durch eine derartige Profilierung der Umrandung wird die Grundplatte und somit das Basisteil bzw. die Halterung stabilisiert, insbesondere gegen Verbiegen oder Verdrehung.

Zusätzlich kann das Basisteil noch Nuten und Arretiermittel zur Aufnahme des Schildes aufweisen. Das Raster ist derart ausgebildet, dass es zumindest bereichsweise, vorzugsweise über einen überwiegenden Teil der Grundplatte periodisch ist. Durch diese rasterartige Anordnung der Löcher lässt sich die Halterung an nahezu beliebige Fahrzeuge befestigen. Durch die Periodizität des Rasters kann die Halterung außerdem diskontinuierlich, d. h. schrittweise, an dem zu befestigenden Fahrzeugteil verrückt bzw. positioniert werden. Durch die Anordnung der durchgehenden Löcher in einem gleichmäßigen Raster ist die Halterung universell an jedem Fahrzeug befestigbar.

Es ist weiter vorgesehen, dass mindestens ein Teil, vorzugsweise alle Löcher, des Rasters identisch ausgebildet sind. Es ist außerdem denkbar, dass die Gestalt der durchgehenden Löcher variiert. Durch diese Variation in der Gestalt der Löcher kann eine weitere Universalität erreicht werden, in dem die Löcher für verschiedene Befestigungsmittel zur Verfügung gestellt werden.

Bevorzugt ist es weiter vorgesehen, dass die Mittelpunkte wenigstens einiger Löcher auf einer Linie, parallel, insbesondere senkrecht, vorzugsweise schräg zu einer Längsseite der Grundplatte liegen und der Abstand zwischen den Mittelpunkten zweier benachbarter Löcher mindestens gleich deren Durchmesser ist. Durch diese Anordnung sind benachbarte Löcher zueinander auf "Lücke" positioniert. Dadurch bilden sich zwischen den Löchern Stege, die die Grundplatte stabilisieren. Durch verschiedene Rasterungen der Löcher kann die Gestalt, d. h. die Breite und die Länger dieser Stege unterschiedlich sein und somit die Stabilität der Grundplatte für verschiedene Anwendungszwecke optimiert werden. Insbesondere sieht es die Erfindung weiter vor, dass die Löcher ringförmig, vorzugsweise kreisförmig ausgebildet sind. Eine kreisförmige Ausgestaltung ist besonders vorteilhaft, da sie so mit der Form der Befestigungsmittel (meistens zylindrische Schrauben) übereinstimmen. Es sind jedoch auch jegliche andere nicht kreisförmige Ringe denkbar, die der Aufnahme von Befestigungsmittel dienen.

Eine weitere vorteilhafte Ausgestaltung der Erfindung sieht es vor, dass die Löcher als Langlöcher ausgebildet sind und Längsachsen der Langlöcher parallel, insbesondere senkrecht, vorzugsweise quer, zu einer Längsseite der Grundplatte ausgerichtet sind. Die Ausgestaltung der Löcher als Langlöcher bietet weiter die Möglichkeit, dass die Halterung, wenn sich diese bereits an dem Fahrzeug befindet, ausrichten lässt, in dem sie noch geringfügig im Rahmen der Abmessungen der Langlöcher verschiebbar ist.

Es kann weiter vorgesehen sein, dass die als Raster angeordneten Löcher als Polygone, insbesondere als Sechsecke, vorzugsweise als gleichseitige Sechsecke ausgebildet sind. Diese polygone Ausgestaltung, insbesondere die sechseckige Ausgestaltung gewährt die Möglichkeit, die Löcher wabenartig anzuordnen. Durch diese wabenartige Anordnung kann die Fläche der Stege zwischen den Löchern minimiert werden bei gleichzeitiger Stabilisierung der Halterung. Es ist jedoch auch denkbar, dass die Löcher als Dreiecke, die untereinander um 180° gedreht sind ausgebildet sind.

Des Weiteren ist es erfindungsgemäß vorgesehen, dass die Grundplatte zwei gegenüberliegende, insbesondere gleich ausgebildete Teilflächen aufweist, die vorzugsweise symmetrisch zu einer Querachse des Basisteils angeordnet sind, wobei den Teilflächen die gleichmäßigen Raster der durchgehenden Löcher zugeordnet sind. Diese Teilflächen erstrecken sich vorzugsweise über die gesamte Breite der Grundplatte und über beispielsweise ein Fünftel, ein Viertel, ein Drittel oder dergleichen der Länge der Grundplatte. Während die Teilflächen den Querseiten der Grundplatte zugeordnet sind, ist zwischen den beiden Teilflächen eine weitere Fläche ausgebildet, die weitere Löcher bzw. Öffnungen aufweisen. Außerdem können den Öffnungen in dem Mittelteil Unterlegscheiben zugeordnet sein, die aus dem Material der Grundplatte entfernbar sind und der Befestigung der Halterung am Fahrzeug dienen. Teilbereiche der Teilflächen bzw. der Grundplatte, die nicht der Befestigung der Halterung dienen sollen, können ganz als Öffnung bzw. Loch ausgebildet sein, um Material bzw. Gewicht einzusparen. Es ist aber auch denkbar, dass der gesamten Halterung, d.h. allen drei Teilflächen ein gleichmäßiges Raster der durchgehenden Löcher zugeordnet ist.

Ein weiteres bevorzugtes Ausführungsbeispiel der Erfindung beschreibt eine Halterung, bei der die den beiden Teilflächen zugeordneten Löcher bezüglich der Querachse des Basisteils symmetrisch, vorzugsweise spiegelsymmetrisch, angeordnet sind. Durch diese symmetrische Anordnung der Löcher wird gewährleistet, dass die Halterung gerade, d. h. mit der Längsachse parallel zum Horizont, ausgerichtet werden kann.

Darüber hinaus kann beispielsweise einem kreisförmigen Loch eine polygone Umrandung zugeordnet sein und umgekehrt.

Bevorzugt ist es vorgesehen, dass die profilierte Umrandung einen dreieckigen, vorzugsweise rechteckigen Querschnitt aufweist. Diese dreieckige Profilierung kann beispielsweise vorteilhaft bei der Aufnahme eines Befestigungsmittels bzw. einer Unterlegscheibe für ein Befestigungsmittel sein und zwar in dem Sinne, dass durch die Profilierung eine gewisse Gegenspannung gegen die Befestigungskraft aufgebaut wird.

Weiter ist es insbesondere vorgesehen, dass die Umrandung relativ zu der Grundplatte vorsteht oder vorspringt. Dieses Vorstehen bzw. Vorspringen kann sowohl in Richtung des Kennzeichens erfolgen und/oder in Richtung des Fahrzeugs. Durch ein derartiges Vorstehen bzw. Vorspringen kann die Umrandung der Löcher in direkten Kontakt mit dem Schild bzw. mit dem Fahrzeug gebracht werden, was zu einer verbesserten Befestigung der Halterung bzw. des Schildes führt.

Insbesondere sieht es die Erfindung weiter vor, dass die Umrandung die Löcher beabstandet umgibt. Somit kann es vorgesehen sein, dass zwischen dem Loch und der Profilierung eine ebene Fläche ausgebildet ist, die parallel zu der Grundplatte verläuft. Durch diese beabstandete Umrandung der Löcher wird die Aufnahme des Befestigungsmittels, vorzugsweise des Kopfes einer Schraube, verbessert.

Vorteilhafte Ausführungsbeispiele einer Halterung werden nachfolgend anhand der Zeichnung näher erläutert. In dieser zeigen:
- Fig. 1: eine Draufsicht auf eine Halterung,
- Fig. 2: ein vertikaler Schnitt in Querrichtung der Halterung gemäß Fig. 1,
- Fig. 3: eine Draufsicht auf ein weiteres Ausführungsbeispiel der Halterung,
- Fig. 4: ein vertikaler Schnitt in Querrichtung der Halterung gemäß Fig. 3,
- Fig. 5: eine Draufsicht auf ein weiteres Ausführungsbeispiel der Halterung,
- Fig. 6: ein vertikaler Schnitt in Querrichtung der Halterung gemäß Fig. 5,
- Fig. 7: eine Draufsicht auf ein weiteres Ausführungsbeispiel der Halterung,
- Fig. 8: ein vertikaler Schnitt in Querrichtung der Halterung gemäß Fig. 7,
- Fig. 9: eine Draufsicht auf ein weiteres Ausführungsbeispiel einer Halterung,
- Fig. 10: ein vertikaler Schnitt in Querrichtung der Halterung gemäß Fig. 9,
- Fig. 11: eine Draufsicht auf ein weiteres Ausführungsbeispiel der Halterung,
- Fig. 12: ein vertikaler Schnitt in Querrichtung der Halterung gemäß Fig. 11,
- Fig. 13: ein vertikaler Schnitt durch ein Loch mit Umrandung,
- Fig. 14: ein vertikaler Schnitt durch ein weiteres Ausführungsbeispiel einer Umrandung,
- Fig. 15: ein vertikaler Schnitt durch ein weiteres Ausführungsbeispiel einer Umrandung, und
- Fig. 16: ein vertikaler Schnitt gemäß der Umrandung der Fig. 15 mit einer eine Scheibe aufweisenden Schraube.

In den Figuren sind verschiedene Ausführungsbeispiele einer Halterung für ein Kennzeichenschild von Kraftfahrzeugen gezeigt. Die Halterung besteht im Wesentlichen aus Kunststoff, insbesondere aus thermoplastischem Material, vorzugsweise Polypropylen und wird im Spritzgussverfahren hergestellt. Übereinstimmend weisen alle Halterungen 20 ein Basisteil 21, eine Grundplatte 22 und einen die Grundplatte 22 umgebenden Rand 23 auf.

Das Basisteil 21 dient zur Aufnahme eines nicht dargestellten Schildes und ist in seiner Dimensionierung nur geringfügig größer als ein derartiges Schild. Das Schild wird innerhalb des Randes von Arretiermitteln 24 und einer nicht dargestellten verschwenk- bzw. verrastbaren Arretierschiene am unteren Rand 25 des Basisteils 21 befestigt.

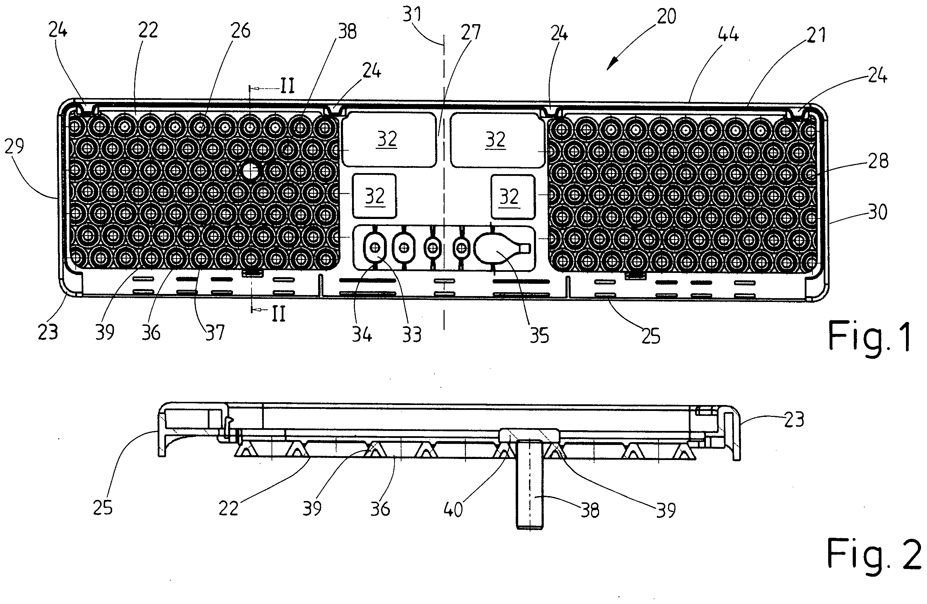

Die Grundplatte 22 ist im in Fig. 1 dargestellten Ausführungsbeispiel in drei Teilflächen 26, 27 und 28 unterteilt. Die Teilflächen 26 und 28 sind den Querrändern 29 und 30 zugeordnet und erstrecken sich jeweils über wenigstens bzw. höchstens ein Drittel der Länge der Halterung 20.

Zwischen den Teilflächen 26 und 28 ist eine weitere Teilfläche 27 angeordnet. Die Teilflächen 26, 27 und 28 liegen alle in einer Ebene, können aber auch untereinander versetzt sein. Die Teilflächen 26 und 28 sind bezüglich einer Querachse 31 symmetrisch ausgebildet, können sich aber auch asymmetrisch verhalten. Die Teilflächen 26, 27 und 28 sind rechteckig ausgebildet und bilden in ihrer Summe gerade die Fläche der Grundplatte 22.

Die Teilfläche 27 weist symmetrisch zu der Querachse 31 rechteckige Öffnungen 32 auf. Des Weiteren befinden sich in der Teilfläche 27 Montagehilfen 33, 35 wie beispielsweise Unterlegscheiben, die über Stege 34 mit der Teilfläche 27 verbunden sind. Die Montagehilfen 33, 35 können leicht aus der Teilfläche 27 herausgedrückt werden.

Die Teilflächen 26 und 28 weisen durchgehende Löcher 36 in einem gleichmäßigen Raster auf (der Übersicht halber wird nur ein Loch mit Bezugsziffern versehen). Das Raster ist derart beschaffen, dass die Mittelpunkte 37 der Löcher 36 auf einer gedachten Linie liegen. Die Löcher 36 sind in den Teilflächen 26 und 28 in einer dichtesten Packung angeordnet, sodass die Zwischenräume zwischen den Löchern 36 minimiert sind. Durch diese rasterartige Anordnung der Löcher 36 entstehen mehrere Symmetrieebenen die parallel, senkrecht oder quer zu der Querachse 31 der Halterung 20 ausgerichtet sind.

Die Löcher 36 sind derart beschaffen, dass durch sie hindurch ein Befestigungsmittel 38 gesteckt werden kann, welches die Halterung 20 mit dem Kraftfahrzeug verbindet. Zur Anschauung ist in der Fig. 1 ein einzelnes derartiges Befestigungsmittel 38 beispielhaft aufgeführt.

Die kreisförmigen Löcher 36 sind von einer profilierten Umrandung 39 umgeben. Diese profilierte Umrandung 39 kann beispielsweise aus der Ebene der Grundplatte vorstehen bzw. vorspringen oder in der Ebene der Grundplatte 22 liegen. Darüber hinaus kann die Umrandung entweder in Richtung des Schildes, des Fahrzeuges oder abwechselnd in beide Richtungen ausgerichtet sein.

In der Fig. 2 ist ein Querschnitt durch die Halterung 20 der Fig. 1 dargestellt, in der die Umrandung einen dreieckigen Querschnitt aufweist. In der in Fig. 2 dargestellten Umrandung 39 umschließt die Umrandung 39 das Loch 36. Die Dreiecksprofilierung ist derart ausgebildet, dass ein oberer Teil der Umrandung 39 den Kopf 40 des Befestigungsmittels 38 aufnehmen kann. Es ist jedoch auch denkbar, dass die Umrandung 39 einen anderen Querschnitt, wie beispielsweise viereckig, mehreckig oder rund ist. Darüber hinaus ist es denkbar, dass die Umrandung 39 als Wulst, deichartig, kragenartig als Verstärkung oder dergleichen ausgebildet ist.

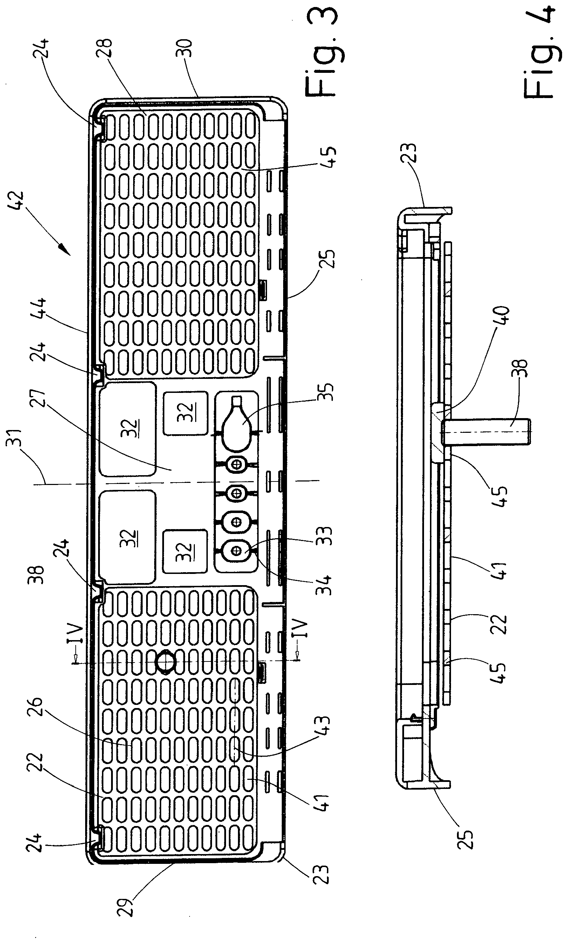

Das in der Fig. 3 dargestellte Ausführungsbeispiel einer Halterung 20 unterscheidet sich von dem Ausführungsbeispiel der Fig. 1 und 2 lediglich darin, dass die Löcher 41 als Langlöcher ausgebildet sind. Ansonsten ist die Halterung 42 identisch mit der Halterung 20, weswegen auch die gleichen Bezugsziffern verwendet werden. Eine Längsachse 43 der Löcher 41 ist in dem in Fig. 3 dargestellten Ausführungsbeispiel der Halterung 42 parallel zu einem Längsrand 44 ausgerichtet. Die in den Fig. 3 und 4 dargestellten Löcher 41 weisen keinerlei Profilierung auf. Vielmehr ist die Umrandung 45 in der gleichen Ebene wie die Grundplatte 22.

Das gleichmäßige Raster der Löcher 41 kann sich auch über die gesamte Fläche der Grundplatte 22 erstrecken.

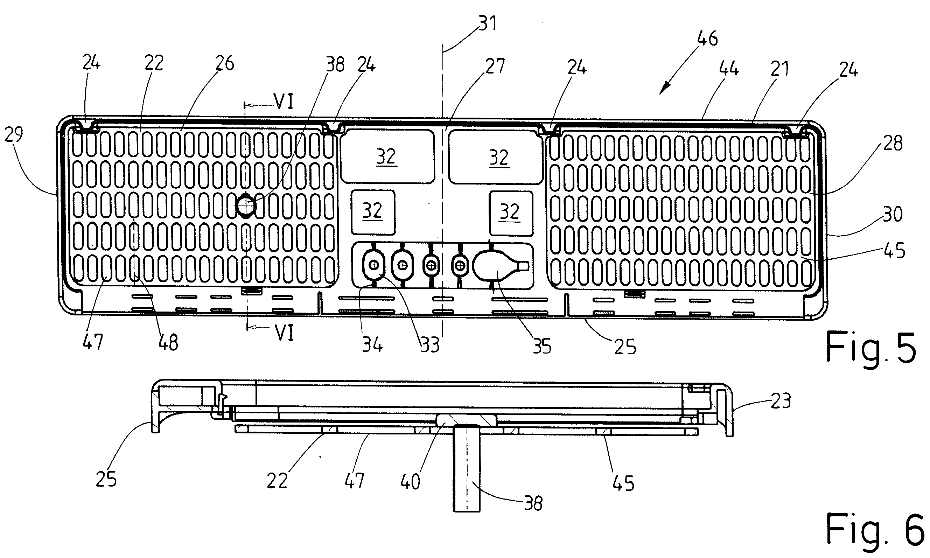

Das in den Fig. 5 und 6 dargestellte Ausführungsbeispiel einer Halterung 46 unterscheidet sich von dem Ausführungsbeispiel der Fig. 3 und 4 lediglich darin, dass die Löcher 47, die ebenfalls als Langlöcher ausgebildet sind, mit einer Längsachse 48 senkrecht zum Längsrand 44 ausgerichtet sind. Ansonsten wird auf die Ausführungsbeispiele 20 und 42 verwiesen.

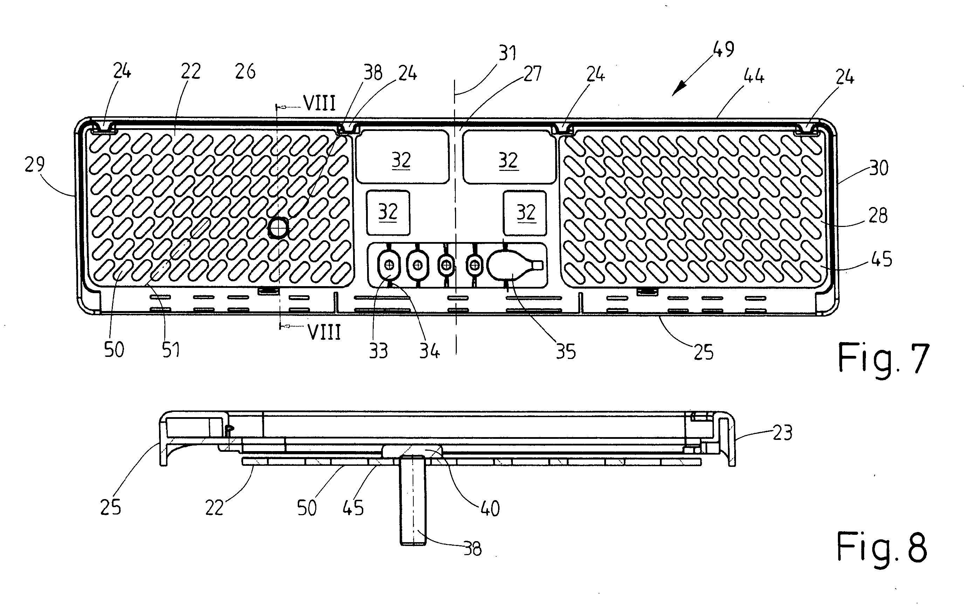

Das in den Fig. 7 und 8 dargestellte Ausführungsbeispiel einer Halterung 49 unterscheidet sich von den Ausführungsbeispielen der Halterungen 42 und 46 lediglich darin, dass die Löcher 50, die ebenfalls als Langlöcher ausgebildet sind, mit einer Längsachse 51 quer zu dem Längsrand 44 ausgerichtet sind. Die Orientierung der Löcher 50 auf den beiden Teilflächen 26 und 28 verhalten sich spiegelsymmetrisch zu der Querachse 31.

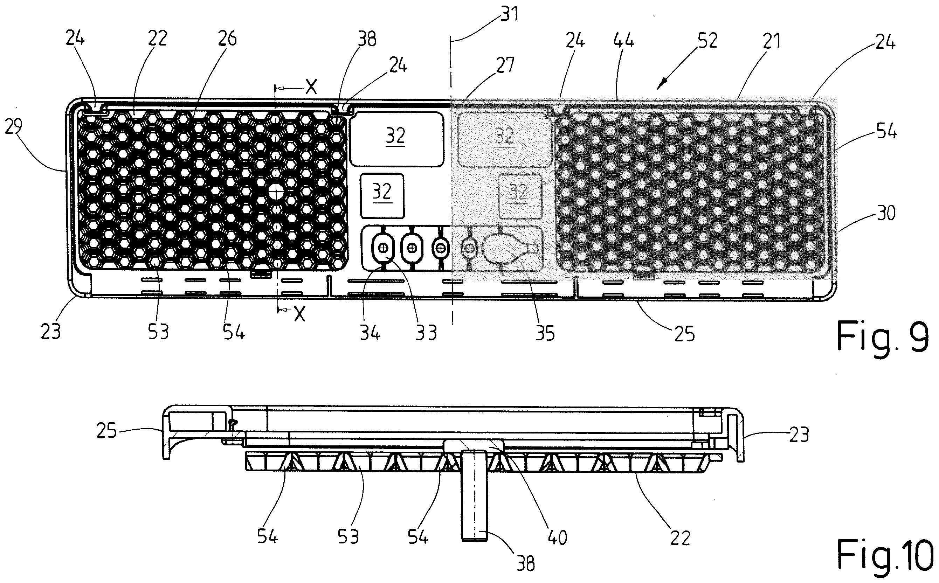

Das in den Fig. 9 und 10 dargestellte Ausführungsbeispiel der Halterung 52 unterscheidet sich von den vorangegangenen Ausführungsbeispielen lediglich in den Löchern 53. Die in der Fig. 9 dargestellten Löcher 53 sind als gleichseitige Sechsecke ausgebildet und untereinander wabenartig angeordnet. Durch diese wabenartige Anordnung lässt sich eine Vielzahl derartiger Löcher 53 auf den Teilflächen 26 und 28 unterbringen. Die Löcher 53 weisen eine Umrandung 54 auf, die in ihrer Form den sechseckigen Löchern 53 folgen. Erfindungsgemäß ist es jedoch vorgesehen, dass die Form der Löcher von der Form der Umrandung abweicht.

In der Fig. 10 ist ein vertikaler Schnitt durch die in der Fig. 9 dargestellten Halterung 52 dargestellt. Dabei erstreckt sich das Befestigungsmittel 38 durch ein Loch 50 und liegt dabei mit dem Kopf 40 auf der Umrandung 54 auf. Dadurch ist der Kopf 40 leicht von der Grundplatte 22 beabstandet.

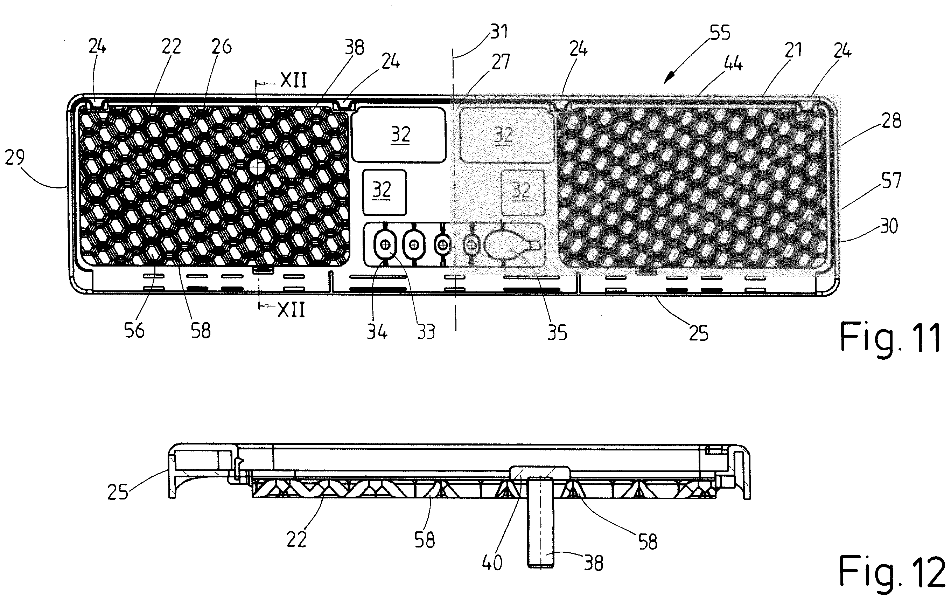

In der Fig. 11 ist ein weiteres Ausführungsbeispiel einer Halterung 55 dargestellt. Die Halterung 55 unterscheidet sich von der Halterung 52 lediglich darin, dass die Löcher 56 als langgezogene Sechsecke (Diamanten) ausgebildet sind. Bei dem in Fig. 11 dargestellten Ausführungsbeispiels der Löcher 56 ist eine Längsachse 57 der Löcher 56 schräg gegenüber einem Längsrand 44 ausgerichtet. Es ist jedoch auch denkbar, dass die Längsachse 57 der Löcher 56 parallel bzw. senkrecht zu dem Längsrand 44 ausgerichtet sind.

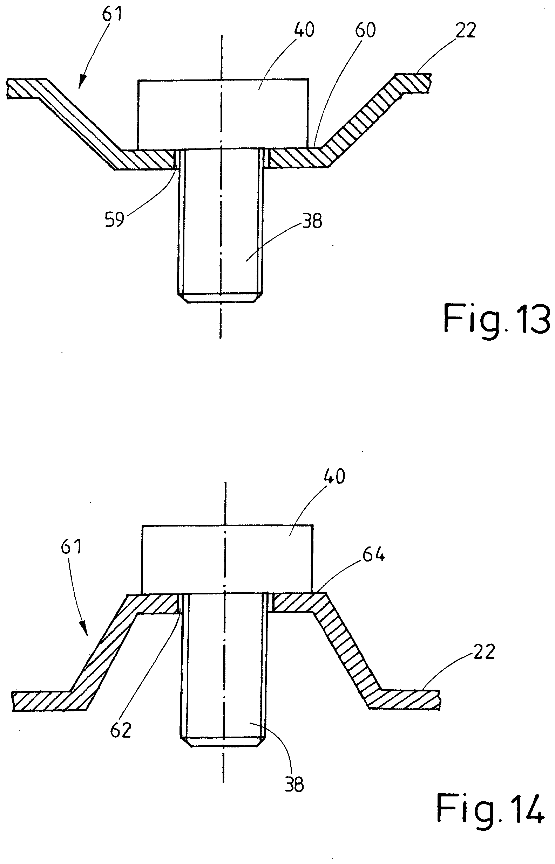

Bei der in Fig. 13 dargestellten Umrandung 58 ist die Profilierung gegenüber der Grundplatte 22 in Richtung Kraftfahrzeug gerichtet. Das Loch 59 des in Fig. 13 dargestellten Ausführungsbeispiel der Umrandung 58 ist dabei im Durchmesser kleiner als eine ebene Basis 60 der Umrandung 58. Dadurch kann der Kopf 40 des Befestigungsmittels 38 flächig mit der Halterung 20 in Verbindung gebracht werden. Der Kopf 40 des Befestigungsmittels 38 befindet sich bei diesem Ausführungsbeispiel der Umrandung 58 nahezu in einer Ebene mit der Grundplatte 22.

Bei dem in Fig. 14 dargestellten Ausführungsbeispiel einer Umrandung 61 steht die Umrandung 61 aus der Grundplatte 22 hervor. Das Loch 62 befindet sich somit gegenüber der Grundplatte 22 leicht erhöht auf einer Art Plateau.

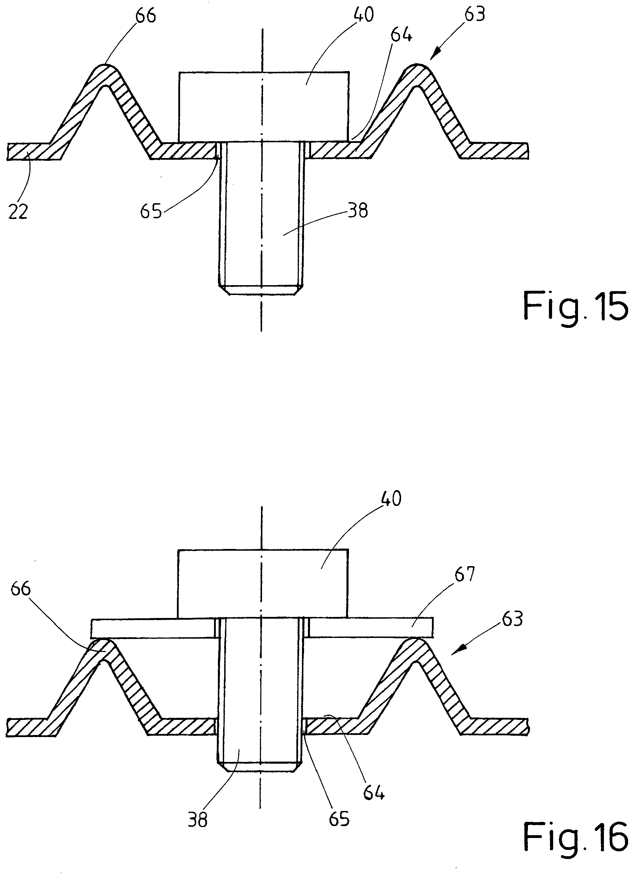

Die in der Fig. 15 dargestellte Umrandung 63 ist ähnlich zu der Umrandung 39 der Fig. 1. Im Unterschied zu der Umrandung 39 weist die Umrandung 63 jedoch eine Basis 64 auf, mit der der Kopf 40 des Befestigungsmittels 38 einen planaren Kontakt eingehen kann. Die im Querschnitt dreieckige Umrandung 63 umgibt das Loch 65 somit beabstandet und zwar ringförmig oder in einer polygonen Form. Die in der Fig. 15 dargestellte Profilierung der Umrandung 63 ist außerdem so dimensioniert, dass einem Grat 66 der Umrandung 63 eine Unterlegscheibe 67 aufgelegt werden kann (Fig. 16). Durch die Unterlegscheibe 67, die auf dem Grat 66 der Umrandung 63 ruht, ist der Kopf 40 des Befestigungsmittels 38 von der Basis 64 der Umrandung 63 beabstandet. Durch die Verwendung der Scheibe 67 lässt sich eine Spannung auf die Grundplatte 22 ausüben, was zu einer weiteren Stabilisierung der Halterung führt.

**Bezugszeichenliste:**

| | | | |
|---|---|---|---|
| 20 | Halterung | 46 | Halterung |
| 21 | Basisteil | 47 | Loch |
| 22 | Grundplatte | 48 | Längsachse |
| 23 | Rand | 49 | Halterung |
| 24 | Arretierungsmittel | 50 | Loch |
| 25 | unterer Rand | 51 | Längsachse |
| 26 | Teilfläche | 52 | Halterung |
| 27 | Teilfläche | 53 | Loch |
| 28 | Teilfläche | 54 | Umrandung |
| 29 | Querrand | 55 | Halterung |
| 30 | Querrand | 56 | Loch |
| 31 | Querachse | 57 | Längsachse |
| 32 | Öffnung | 58 | Umrandung |
| 33 | Montagehilfe | 59 | Loch |
| 34 | Steg | 60 | Basis |
| 35 | Montagehilfe | 61 | Umrandung |
| 36 | Loch | 62 | Loch |
| 37 | Mittelpunkt | 63 | Umrandung |
| 38 | Befestigungsmittel | 64 | Basis |
| 39 | Umrandung | 65 | Loch |
| 40 | Kopf | 66 | Grat |
| 41 | Loch | 67 | Unterlegscheibe |
| 42 | Halterung | | |
| 43 | Längsachse | | |
| 44 | Längsrand | | |
| 45 | Umrandung | | |

## Patentansprüche

1. Halterung (20, 42, 46, 49, 52, 55) für ein Schild, insbesondere ein Kennzeichenschild für Kraftfahrzeuge, mit einem Basisteil (21), das eine rechteckige Grundplatte (22) aufweist an der das Schild anliegt und mit mehreren Löchern (36, 41, 47, 50, 53, 56, 59, 62, 65), die sich durchgehend senkrecht durch die Grundplatte (22) erstrecken und zur Befestigung der Halterung (20, 42, 46, 49, 52, 55) dienen, wobei die durchgehenden Löcher (36, 41, 47, 50, 53, 56, 59, 62, 65) in einem gleichmäßigen Raster auf mindestens einem Großteil der Fläche der Grundplatte (22) verteilt angeordnet sind, **dadurch gekennzeichnet, dass** die durchgehenden Löcher (36, 53, 56, 59, 62, 65) gegenüber der Grundplatte (22) eine profilierte Umrandung (39, 54, 58, 61, 63) aufweisen, die in ihrer Form von der der Löcher (36, 53, 56, 59, 62, 65) abweicht.

2. Halterung (20, 42, 46, 49, 52, 55) nach Anspruch 1, **dadurch gekennzeichnet, dass** mindestens ein Teil, vorzugsweise alle Löcher (36, 41, 47, 50, 53, 56, 59, 62, 65), des Rasters identisch ausgebildet sind.

3. Halterung (20, 42, 46, 49, 52, 55) nach Anspruch 1 oder 2, **dadurch gekennzeichnet, dass** die Mittelpunkte (37) wenigstens einiger Löcher (36, 41, 47, 50, 53, 56, 59, 62, 65) auf einer Linie parallel, insbesondere senkrecht, vorzugsweise schräg zu einem Längsrand (44) der Grundplatte (22) liegen und der Abstand zwischen den Mittelpunkten (37) von zwei benachbarten Löchern (36, 41, 47, 50, 53, 56, 59, 62, 65) mindestens gleich deren Durchmesser ist.

4. Halterung (20) nach einem der vorhergehenden Ansprüche, **dadurch gekennzeichnet, dass** die Löcher (36) ringförmig, insbesondere kreisförmig ausgebildet sind.

5. Halterung (42, 46, 49) nach einem der vorhergehenden Ansprüche, **dadurch gekennzeichnet, dass** die Löcher (41, 47, 50) als Langlöcher ausgebildet sind und Längsachsen (43, 48, 51) der Langlöcher parallel, insbesondere senkrecht, vorzugsweise quer, zu einem Längsrand (44) der Grundplatte (22) ausgerichtet sind.

6. Halterung (52, 55) nach einem der Ansprüche 1 bis 3, **dadurch gekennzeichnet, dass** die als Raster angeordneten Löcher (53, 56) als Polygone, insbesondere als Sechsecke, vorzugsweise als gleichseitige Sechsecke, ausgebildet sind.

7. Halterung (52, 55) nach Anspruch 6, **dadurch gekennzeichnet, dass** die im Raster angeordneten Löcher (53, 56) wabenartig angeordnet sind.

8. Halterung (20, 42, 46, 49, 52, 55) nach einem der vorhergehenden Ansprüche, **dadurch gekennzeichnet, dass** die Grundplatte (22) zwei gegenüberliegende, insbesondere gleich ausgebildete Teilflächen (26, 28) aufweist, die vorzugsweise symmetrisch zu einer Querachse (31) des Basisteils (21) angeordnet sind, wobei den Teilflächen (26, 28) die gleichmäßigen Raster der durchgehenden Löcher (36, 41, 47, 50, 53, 56, 59, 62, 65) zugeordnet sind.

9. Halterung (20, 42, 46, 49, 52, 55) nach Anspruch 8, **dadurch gekennzeichnet, dass** die den beiden Teilflächen (26, 28) zugeordneten Löcher (36, 41, 47, 50, 53, 56, 59, 62, 65) bezüglich der Querachse (31) des Basisteils (21) symmetrisch, vorzugsweise spiegelsymmetrisch, angeordnet sind.

10. Halterung (20, 52, 55) nach Anspruch 1, **dadurch gekennzeichnet, dass** die profilierte Umrandung (39, 54, 58, 61, 63) einen dreieckigen, vorzugsweise rechteckigen, Querschnitt aufweist.

11. Halterung (20, 52, 55) nach einem der Ansprüche 1 oder 10, **dadurch gekennzeichnet, dass** die Umrandung (39, 54, 58, 61, 63) relativ zu der Grundplatte (22) vorsteht oder vorspringt.

12. Halterung (20, 52, 55) nach einem der Ansprüche 1, 10 oder 11, **dadurch gekennzeichnet, dass** die Umrandung (39, 54, 58, 61, 63) die Löcher (36, 53, 56) beabstandet umgibt.

## Claims

1. Support (20, 42, 46, 49, 52, 55) for a sign, in particular a license plate for motor vehicles, with a basic part (21) which has a rectangular base plate (22) against which the sign lies, and with a plurality of holes (36, 41, 47, 50, 53, 56, 59, 62, 65) which extend continuously perpendicularly through the base plate (22) for fastening the support (20, 42, 46, 49, 52, 55), wherein the continuous holes (36, 41, 47, 50, 53, 56, 59, 62, 65) are arranged distributed over at least a large part of the surface of the base plate (22) in a uniform grid, **characterized in that** the continuous holes (36, 53, 56, 59, 62, 65) have a profiled border (39, 54, 58, 61, 63) in relation to the base plate (22), the border differing in its shape from that of the holes (36, 53, 56, 59, 62, 65).

2. Support (20, 42, 46, 49, 52, 55) according to Claim 1, **characterized in that** at least some of the holes, preferably all of the holes (36, 41, 47, 50, 53, 56, 59, 62, 65), of the grid are identical.

3. Support (20, 42, 46, 49, 52, 55) according to Claim 1 or 2, **characterized in that** the centre points (37) of at least some holes (36, 41, 47, 50, 53, 56, 59, 62, 65) lie on a line parallel, in particular perpendicularly, preferably obliquely with respect, to a longitudinal edge (44) of the base plate (22), and the distance between the centre points (37) of two adjacent holes (36, 41, 47, 50, 53, 56, 59, 62, 65) is at least equal to the diameter thereof.

4. Support (20) according to one of the preceding claims, **characterized in that** the holes (36) are annular, in particular circular.

5. Support (42, 46, 49) according to one of the preceding claims, **characterized in that** the holes (41, 47, 50) are in the form of elongated holes, and the longitudinal axes (43, 48, 51) of the elongated holes are oriented parallel, in particular perpendicularly, preferably transversely with respect, to a longitudinal edge (44) of the base plate (22).

6. Support (52, 55) according to one of Claims 1 to 3, **characterized in that** the holes (53, 56) arranged in the form of a grid are designed as polygons, in particular as hexagons, preferably as equilateral hexagons.

7. Support (52, 55) according to Claim 6, **characterized in that** the holes (53, 56) arranged in the grid are arranged in the manner of a honeycomb.

8. Support (20, 42, 46, 49, 52, 55) according to one of the preceding claims, **characterized in that** the base plate (22) has two opposite partial surfaces (26, 28) which are in particular of identical design and are preferably arranged symmetrically with respect to a transverse axis (31) of the basic part (21), wherein the uniform grids of the continuous holes (36, 41, 47, 50, 53, 56, 59, 62, 65) are assigned to the partial surfaces (26, 28).

9. Support (20, 42, 46, 49, 52, 55) according to Claim 8, **characterized in that** the holes (36, 41, 47, 50, 53, 56, 59, 62, 65) assigned to the two partial surfaces (26, 28) are arranged symmetrically, preferably mirror-symmetrically, with respect to the transverse axis (31) of the basic part (21).

10. Support (20, 52, 55) according to Claim 1, **characterized in that** the profiled border (39, 54, 58, 61, 63) has a triangular, preferably rectangular, cross section.

11. Support (20, 52, 55) according to either of Claims 1 and 10, **characterized in that** the border (39, 54, 58, 61, 63) protrudes or projects relative to the base plate (22).

12. Support (20, 52, 55) according to one of Claims 1, 10 or 11, **characterized in that** the border (39, 54, 58, 61, 63) surrounds the holes (36, 53, 56) at a distance.

## Revendications

1. Support (20, 42, 46, 49, 52, 55) pour un panneau, en particulier une plaque d'immatriculation pour des véhicules automobiles, avec une partie de base (21), qui présente une plaque de base rectangulaire (22) sur laquelle le panneau est appliqué et avec plusieurs trous (36, 41, 47, 50, 53, 56, 59, 62, 65), qui s'étendent de façon continue perpendiculairement à travers la plaque de base (22) et qui servent pour la fixation du support (20, 42, 46, 49, 52, 55), dans lequel les trous continus (36, 41, 47, 50, 53, 56, 59, 62, 65) sont répartis selon un motif régulier sur au moins une grande partie de la plaque de base (22), **caractérisé en ce que** les trous continus (36, 53, 56, 59, 62, 65) présentent par rapport à la plaque de base (22) une bordure profilée (39, 54, 58, 61, 63), dont la forme diffère de celle des trous (36, 53, 56, 59, 62, 65).

2. Support (20, 42, 46, 49, 52, 55) selon la revendication 1, **caractérisé en ce qu'**au moins une partie, de préférence tous les trous (36, 41, 47, 50, 53, 56, 59, 62, 65) du motif sont identiques.

3. Support (20, 42, 46, 49, 52, 55) selon la revendication 1 ou 2, **caractérisé en ce que** les points centraux (37) d'au moins quelques trous (36, 41, 47, 50, 53, 56, 59, 62, 65) sont situés sur une ligne parallèle, en particulier perpendiculaire, de préférence oblique par rapport à un bord longitudinal (44) de la plaque de base (22) et la distance entre les points centraux (37) de deux trous voisins (36, 41, 47, 50, 53, 56, 59, 62, 65) est au moins égale à leur diamètre.

4. Support (20) selon l'une quelconque des revendications précédentes, **caractérisé en ce que** les trous (36) sont de forme annulaire, en particulier de forme circulaire.

5. Support (42, 46, 49) selon l'une quelconque des revendications précédentes, **caractérisé en ce que** les trous (41, 47, 50) sont formés par des trous oblongs et les axes longitudinaux (43, 48, 51) des trous oblongs sont orientés parallèlement, en particulier perpendiculairement, de préférence transversalement à un bord longitudinal (44) de la plaque de base (22).

6. Support (52, 55) selon l'une quelconque des revendications 1 à 3, **caractérisé en ce que** les trous (53, 56) disposés selon un motif sont formés par des polygones, en particulier des hexagones, de préférence des hexagones équilatéraux.

7. Support (52, 55) selon la revendication 6, **caractérisé en ce que** les trous (53, 56) disposés selon un motif sont disposés en nid d'abeilles.

8. Support (20, 42, 46, 49, 52, 55) selon l'une quelconque des revendications précédentes, **caractérisé en ce que** la plaque de base (22) présente deux surfaces partielles (26, 28), de préférence de même forme, qui sont disposées de préférence symétriquement par rapport à un axe transversal (31) de la partie de base (21), dans lequel les motifs réguliers des trous continus (36, 41, 47, 50, 53, 56, 59, 62, 65) sont associés aux surfaces partielles (26, 28).

9. Support (20, 42, 46, 49, 52, 55) selon la revendication 8, **caractérisé en ce que** les trous (36, 41, 47, 50, 53, 56, 59, 62, 65) associés aux deux surfaces partielles (26, 28) sont disposés de façon symétrique, de préférence avec la symétrie de réflexion, par rapport à l'axe transversal (31) de la partie de base (21).

10. Support (20, 52, 55) selon la revendication 1, **caractérisé en ce que** la bordure profilée (39, 54, 58, 61, 63) présente une section transversale triangulaire, de préférence rectangulaire.

11. Support (20, 52, 55) selon une des revendications 1 ou 10, **caractérisé en ce que** la bordure (39, 54, 58, 61, 63) est saillante ou proéminente par rapport à la plaque de base (22).

12. Support (20, 52, 55) selon l'une quelconque des revendications 1, 10 ou 11, **caractérisé en ce que** la bordure (39, 54, 58, 61, 63) entoure les trous (36, 53, 56) à distance.
